# EUROPÄISCHE PATENTSCHRIFT

(11) **EP 1 252 808 B1**
(45) Veröffentlichungstag und Bekanntmachung des Hinweises auf die Patenterteilung: **17.01.2007**
(21) Anmeldenummer: 02006980.3
(22) Anmeldetag: 27.03.2002
(51) Int. Cl.: A01D 34/66

(54) **Mähvorrichtung**
Mowing device
Dispositif faucheur

(30) Priorität: 28.04.2001 DE 10121014
(43) Veröffentlichungstag der Anmeldung: 30.10.2002
(73) Patentinhaber: DEERE & COMPANY, Moline, Illinois 61265-8098 (US)
(72) Erfinder: Franet, Roger, 57200 Sarreguemines (FR); Guiet, Lionel, 70100 Gray (FR); Defrancq, Hubert, 02190 Guignicourt (FR); Kem, Daniel, 02160 Moulins (FR)
(74) Vertreter: Magin, Ludwig Bernhard

(56) Entgegenhaltungen:
- EP-A- 0 642 731
- EP-A- 0 740 898
- EP-A- 0 801 888
- EP-A- 0 804 870
- DE-A- 19 620 071
- FR-A- 2 747 879
- US-A- 4 178 746
- US-A- 5 069 022
- US-A- 6 125 619

## Beschreibung

Die Erfindung betrifft eine Mähvorrichtung mit einem höhenbeweglichen Träger mit wenigstens einem Tragteil zum Tragen einer oder mehrerer Mäheinheiten.

Mähvorrichtungen, insbesondere für Gras, weisen ein Mähwerk auf, dessen Neigung zum Boden einstellbar ist, um das Aufgreifen von Steinen oder anderen Fremdkörpern zu vermeiden, um eine bestimmte Stoppelhöhe zu erreichen und um einen Ausgleich zu schaffen, wenn die Räder des tragenden Fahrzeugs in den Boden einsinken.

Die Einstellung dieses sogenannten Schnittwinkels erfolgt bei Mähvorrichtungen, die an eine front- oder heckseitige Dreipunktgerätekupplung angeschlossen sind, durch die Veränderung der Länge des Oberlenkers. Bei gezogenen Mähvorrichtungen, z. B. nach der US-A-4,177,625 oder der EP 642 731 A1, ist ein Mähwerk in unteren Lenkern vertikal schwenkbar von einem Rahmen aufgenommen. Zwischen der Oberseite des Mähwerks und dem Rahmen erstreckt sich ein oberer Lenker, der in der Länge einstellbar ist, um den Schnittwinkel des Mähwerks gegenüber dem Boden einzustellen.

Das der Erfindung zugrunde liegende Problem wird darin gesehen, daß eine Einstellung des Schnittwinkels umständlich ist und daher nur bedingt vorgenommen wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Schnittwinkel der Mähvorrichtung und mit ihr jede Mäheinheit auch von einem Fahrerstand aus verstellt werden, sodaß davon optimal Gebrauch gemacht und der jeweils richtige Schnittwinkel gewählt wird. Beispielsweise kann am Rand eines Feldes ein flacher Schnittwinkel von 0 Grad gewählt werden, damit keine Steine und dergleichen aufgenommen werden und die Mäheinheit (en) beschädigen oder das Futter verunreinigen, während nach dem Anmähen der Schnittwinkel auf ca. vier bis sechs Grad eingestellt wird, damit die verbleibenden Stoppeln nicht allzu hoch werden. Eine solche fernbetätigbare Verstellvorrichtung kann sowohl ein mechanisches Gestänge oder Bowdenzug, ein Hydraulikmotor oder ein Elektromotor sein, die insbesondere elektrisch ansteuerbar sind.

Wenn der erste Tragteil an dem Trägerfahrzeug vertikal schwenkbar angebracht und von einer Hubvorrichtung beaufschlagt werden kann, wird der Hubbereich über den Verstellbereich des Schnittwinkels hinaus durch eine einfache Schwenkbewegung vergrößert. Die Lager einer an dem Trägerfahrzeug z. B. angebrachten Häckseltrommel können gleichzeitig als Lager für den ersten Tragteil verwendet werden.

Wenn die Achse des Schwenklagers des zweiten Tragteils auf dem ersten Tragteil oberhalb der Stellvorrichtung angeordnet ist, ist eine Verstellung auch in Fällen möglich, in denen die Mähvorrichtung z.B. bei selbstfahrenden Mähfahrzeugen umbaut ist und entweder nicht mit einem Oberlenker gehalten wird oder kein Platz für eine obenliegende Stellvorrichtung vorhanden ist.

Eine gleichmäßige Einstellung des Schnittwinkels mehrerer Mäheinheiten mit geringem Teileaufwand, nämlich mit nur einer Stellvorrichtung, ist möglich, wenn an dem zweiten Tragteil mehrere Mäheinheiten, z. B. zwei, spiegelbildlich angebracht sind. Dieses Merkmal reduziert die Herstellungskosten und den Bedienungsaufwand. Die spiegelbildliche Anordnung und somit die Anordnung in gleicher Entfernung zu dem Trägerfahrzeug bewirkt, dass eine Verstellung des zweiten Tragteils zu den gleichen Schnittwinkelveränderungen führt.

Heutige Hochleistungsmähgeräte in selbstfahrender Bauweise weisen mehrere Mäheinheiten auf, die in der Mährichtung zueinander versetzt angeordnet sind. Damit aufgrund der unterschiedlich langen Hebelarme keine unterschiedlichen Schnittwinkel entstehen, ist vorgesehen, dass eine weiter entfernte Mäheinheit insbesondere mittels eines Arms vertikal schwenkbar an dem zweiten Tragteil oder einem mit diesem verbundenen vierten Tragteil angebracht ist und sich zwischen dem ersten Tragteil und der weiter entfernten Mäheinheit eine Stellvorrichtung befindet, so dass sich eine Art Parallelogrammgestänge ergibt, das für eine Parallelführung und somit für gleiche Schnittwinkel an allen Mäheinheiten sorgt. Die Stellvorrichtung kann in der einfachsten Form von nicht veränderbarer Länge sein, z. B. eine Kette, ein Seil, eine Strebe, oder dergleichen. Der vierte Tragteil, der mit dem die anderen Mäheinheiten tragenden Tragteil verbunden ist, macht es möglich, eine Standartmäheinheit, bzw. eine Mäheinheit, wie sie im übrigen in der Mähvorrichtung verwendet wird, zu verwenden, und sie zu den übrigen Mäheinheiten versetzt anzubringen. Die gleichsinnige Bewegung gegenüber dem Boden wird aufgrund der starren Verbindung mit dem zweiten und beweglichen Tragteil sichergestellt.

Eine Anordnung des Getriebes seitlich zu der Stellvorrichtung verhindert, dass diese sich während einer vertikalen Bewegung des vierten Tragteils gegenüber dem dritten oder ersten Träger berühren oder sich gar beschädigen. Außerdem ist ein ungestörter Verlauf von Antriebswellen oder dergleichen möglich.

Die Verwendung einer Stellvorrichtung zwischen dem zweiten und dem vierten Tragteil macht es möglich, die an dem vierten Tragteil angebrachte Mäheinheit unabhängig von einer oder mehreren anderen Mäheinheiten auszuheben und somit in eine Außerbetriebsstellung zu bringen, oder ein Hindernis störungsfrei zu überfahren.

Ein horizontal schwenkbarer Arm für eine weitere Mäheinheit macht es einerseits möglich, die Mähbreite zu erhöhen, andererseits aber die Mähvorrichtungsbreite bei Transportfahrten zu verringern.

Wenn es auch grundsätzlich möglich wäre, den Träger und mit ihm alle beteiligten Mäheinheiten in einem Schlitten, mittels eines Parallelogramms oder dergleichen in der Höhe zu verstellen, so bietet die Höhenverstellung infolge eines Schwenkvorgangs aufgrund der einfachen Bewegungen und Teile doch Vorteile bei der Herstellung und Zuverlässigkeit. Dadurch, dass der erste Tragteil nur in einer Richtung an der Hubvorrichtung anliegt, in der anderen Richtung hingegen frei ist, werden unnötige Belastungen der Hubvorrichtung vermieden, wenn das Trägerfahrzeug eine Vertiefung durchfährt und der Träger mit den Mäheinheiten aufgrund der Massenträgheit der sich abwärts bewegenden Hubvorrichtung nicht folgen kann.

Die Verwendung einer Anschlusskonsole, d. h. eines Adapters, einer Kupplung oder dergleichen, zur Verbindung der Mäheinheit mit dem betreffenden Arm hat den Vorteil, dass Mäheinheiten leicht demontiert und montiert und somit ausgetauscht werden können. Die gelenkige Verbindung macht es möglich, dass sich die Mäheinheit Bodenunebenheiten anpassen kann.

Eine schnelle Austauschbarkeit einzelner Mähwerke zu Wartungszwecken ist leicht machbar, wenn die Aufnehmer auf alle Mähwerke passende Anschlussflansche und ein Schwenklager mit einer in der Mährichtung verlaufenden horizontalen Schwenkachse aufweisen. So können entweder identische Flansche bzw. Lochbilder oder Flansche mit Lochbildern verwendet werden, die zu jedem Mähwerk passen. Es wären auch Kupplungen mit Bolzen, Haken-Kupplung und dergleichen zur Verbindung denkbar.

In der Zeichnung ist ein nachfolgend näher beschriebenes Ausführungsbeispiel der Erfindung dargestellt. Es zeigt:
- Fig. 1: eine Mähvorrichtung in Draufsicht,

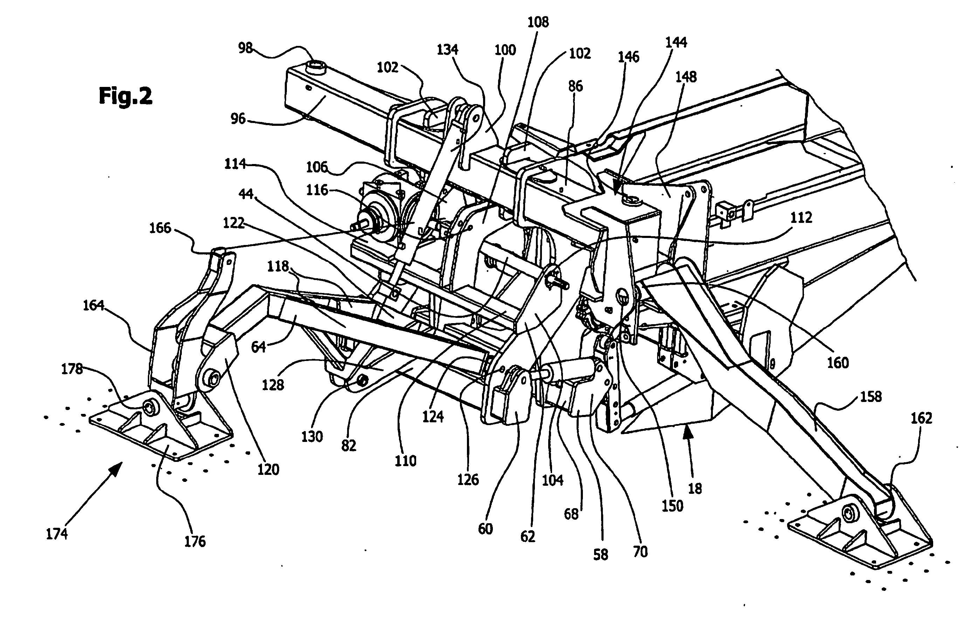

- Fig. 2: einen Teil der Mähvorrichtung in perspektivischer Ansicht von vorne und
- Fig. 3: einen Teil der Mähvorrichtung in Seitenansicht.

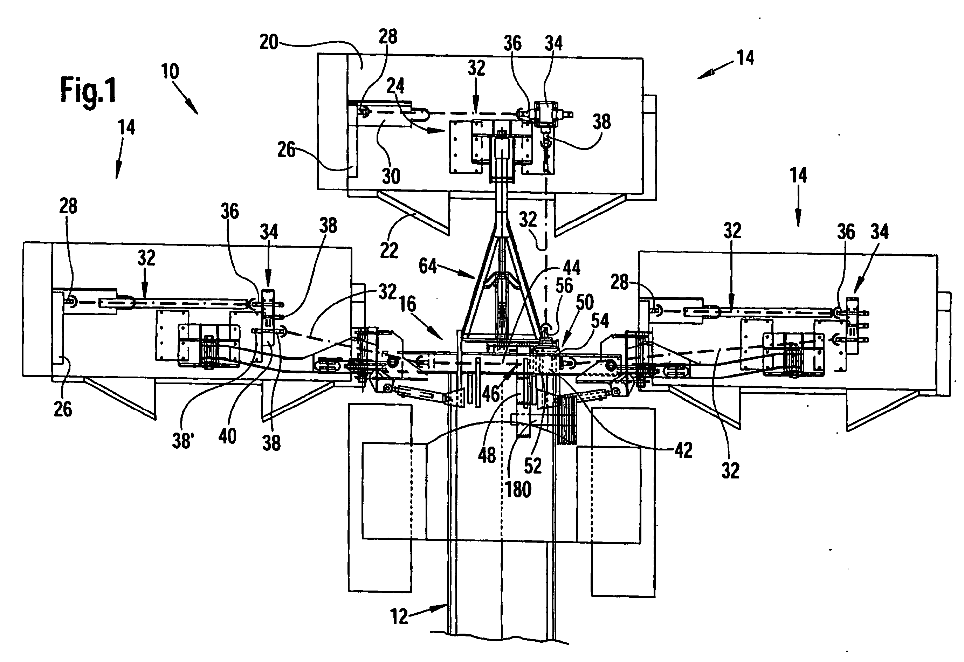

Figur 1 zeigt eine erfindungsgemäße Mähvorrichtung 10 an einem Trägerfahrzeug 12 mit mehreren Mäheinheiten 14 auf einem gemeinsamen Träger 16.

Die Mähvorrichtung 10 dient dem Mähen von Gras oder anderem Erntegut und weist im Betrieb eine Arbeitsbreite von z.B. neun Metern auf, die wesentlich über der zugelassenen Breite für den Transport auf der Straße liegt. Zum Transport auf der Straße wird die Mähvorrichtung 10 auf eine Breite von maximal drei Metern gebracht, wie dies nachfolgend beschrieben wird.

Das Trägerfahrzeug 12 kann als ein Ackerschlepper mit Frontkraftheber oder mit Rückwärtsfahreinrichtung ausgebildet sein; es kann sich aber auch um einen Feldhecksleer, einen Mähdrescher oder um ein eigens für das Mähen ausgebildetes selbstfahrendes Fahrzeug oder andere handeln. In dem dargestellten Ausführungsbeispiel handelt es sich um einen selbstfahrenden Feldhäcksler mit einer frontseitigen Hubvorrichtung 18 in einer Bauweise, wie sie von Feldhäckslern der Firma John Deere bekannt ist.

Die Mäheinheiten 14 sind nahezu identisch ausgebildet und in der Art eines bekannten Frontmähwerks gehalten. In nicht gezeigter Weise ist jede Mäheinheit 14 mit einem Mähwerk versehen, das z. B. als Scheibenmähwerk, Trommelmähwerk oder als Messerbalken ausgeführt sein kann. Wahlweise kann stromabwärts auf das Mähwerk eine Aufbereitungsvorrichtung, z. B. eine Stängelknickvorrichtung oder dergleichen folgen. Jedenfalls enthält jede Mäheinheit 14 ein Gehäuse 20, eine rückwärtige Schwadeinrichtung 22, einen Flanschbereich 24 und ein Getriebe 26.

Das Gehäuse 20 ist im wesentlichen in bekannter Bauart ausgeführt und besteht aus einem Schraub- oder Schweißzusammenbau aus Blechen und Rohren, der seitlich von Kunststoffschürzen umgeben ist und oben eine feste Decke bildet.

Die Schwadeinrichtung 22 gibt das gemähte und evtl. bearbeitete Erntegut an der Rückseite der Mäheinheit 14 auf den Boden ab und besteht im einfachsten Fall aus vertikal ausgerichteten konvergierenden Schwadblechen. In einem nicht dargestellten Ausführungsbeispiel ist anstelle der Schwadbleche ein Transportband, eine Transportschnecke oder dergleichen vorgesehen, die das Erntegut in einem Schwad mittig oder außermittig zu der Mäheinheit 14 auf den Boden ablegen.

Der Flanschbereich 24 befindet sich möglichst nahe des Schwerpunktes der Mäheinheit 14 und kann Gewindebohrungen, Schnappverschlüsse, Hakenverschlüsse oder dergleichen aufweisen. In dem dargestellten Ausführungsbeispiel wird der Flanschbereich 24 von zwei gleich großen Flanschflächen mit jeweils gleichem Lochbild von acht Gewindelöchern gebildet.

Das Getriebe 26 befindet sich in dem vorliegenden Ausführungsbeispiel jeweils auf der in Fahrtrichtung gesehen linken Seite der Mäheinheit 14 und dient dem Antrieb des Mähwerks und der evtl. vorhandenen Aufbereitungsvorrichtung. Hierzu weist das Getriebe 26 eine Eingangswelle 28 und ein nicht gezeigtes Zugmittel, z. B. einen Riemen oder eine Kette, auf. Vor der Eingangswelle 28 ist eine Vertiefung 30 für eine Gelenkwelle 32 vorgesehen, wobei die Vertiefung 30 nicht zwangsläufig vorgesehen sein muss.

Gegenüber dem Getriebe 26 befindet sich ein weiteres Getriebe 34 mit einer Ausgangswelle 36 und einer Eingangswelle 38. Dieses weitere Getriebe 34 ist außermittig in bezug auf die Mährichtung der Mäheinheit 14 angeordnet und in diesem Ausführungsbeispiel ebenfalls lösbar an dem Flanschbereich 24 befestigt, was jedoch nicht zwingend ist. Gemäß der Draufsicht in Figur 1 werden zwei unterschiedliche Bauarten von weiteren Getrieben 34 verwendet. Auf der vorgelagerten und in diesem Fall mittigen Mäheinheit 14 wird ein als Winkelgetriebe ausgebildetes, und auf den seitlichen Mäheinheiten 14 wird ein als Stirnrad- oder Zugmittelgetriebe ausgebildetes, weiteres Getriebe 34 verwendet. Die Eingangswelle 38 des als Stirnrad- oder Zugmittelgetriebe ausgebildeten weiteren Getriebes 34 erstreckt sich durch ein Getriebegehäuse 40 hindurch und bietet auf beiden Seiten einen Stummel zur Aufnahme einer Gelenkwelle 32. Aus rein technischen Gesichtspunkten wäre es möglich, stattdessen zwei schwenkbar miteinander verbundene Winkelgetriebe zu verwenden, bei denen die Eingangs- und die Ausgangswelle 38 und 36 beliebige Stellungen zueinander einnehmen können. In jedem Fall ist die Ausgangswelle 36 über die Gelenkwelle 32 mit der Eingangswelle 28 des Getriebes 26 antriebsmäßig, wenn auch trennbar verbunden. Die Ausgangswelle 36 liegt in diesem Ausführungsbeispiel bei jeder Mäheinheit in der gleichen Ebene wie die Eingangswelle 28 des Getriebes 26, gesehen quer zur Mährichtung. Wenn auch deren vertikale Fluchtung angestrebt wird, so ist in dem vorliegenden Ausführungsbeispiel dennoch ein geringer vertikaler Versatz vorgesehen, wobei die Neigung der Gelenkwelle 32 dadurch ermöglicht wird, dass sie in die Vertiefung 30 eintaucht. Die Eingangswelle 38 verläuft bei dem als Winkelgetriebe ausgebildeten weiteren Getriebe 34 senkrecht zu der Ausgangswelle 36.

An, in bzw. auf dem Träger 16 befindet sich ein hauptsächliches Getriebe 42, das als ein Winkelgetriebe der T-Konfiguration ausgebildet ist. Das hauptsächliche Getriebe 42 wird von einer Welle 44 durchdrungen, die sowohl als Eingangs- wie auch als Ausgangswelle dient. Auf der Welle 44 ist ein Antriebsrad 46 eines zu dem Trägerfahrzeug 12 führenden Zugmittelgetriebes 48 drehfest montiert. In einem Getriebegehäuse 50 ist auf die Welle 44 ein als Kegelrad ausgebildetes Zahnrad 52 drehfest aufgesetzt, das mit einem rechtwinklig dazu angeordneten ebenfalls als Kegelrad ausgebildeten Zahnrad 54 kämmt. Das Zahnrad 54 sitzt auf einer Ausgangswelle 56, die senkrecht zu der Welle 44 verläuft und sich zu dem weiteren Getriebe 34 auf der vorderen Mäheinheit 14 erstreckt. Die beiden als Winkelgetriebe ausgebildeten weiteren und hauptsächlichen Getriebe 34 und 42 können wie im vorliegenden Ausführungsbeispiel gleich ausgebildet sein, wobei dann die Ausgangswelle 56 als Eingangswelle und die Welle 44 als Ausgangswelle 36 wirkt.

Alle Eingangswellen 38, Ausgangswellen 36, 56 und Wellen 44 sind mit einem nicht gezeigten und genormten Zahnprofil versehen, auf das eine handelsübliche Gelenkwelle 32 aufgesetzt werden kann. In dem dargestellten Ausführungsbeispiel verlaufen in der Betriebsstellung der Mäheinheiten 14 die quer zur Mährichtung verlaufende Welle 44 und die Eingangswellen 38, sowie die Ausgangswellen 36 und Eingangswellen 28 zueinander versetzt. Hingegen befindet sich die Ausgangswelle 56 des hauptsächlichen Getriebes 42 und die Eingangswelle 38 des als Winkelgetriebe ausgebildeten weiteren Getriebes 34 in einer Flucht. Im allgemeinen ist ein Versatz der Anschlusspunkte innerhalb der für die jeweils verwendeten Gelenkwellen 32 bestehenden Grenzen möglich; im Bedarfsfall können auch Weitwinkelgelenke oder mehrere unter einem Winkel zueinander verlaufende, hintereinander angeordnete Gelenkwellen verwendet werden, die über ein nicht gezeigtes Lager in den Flanschbereichen miteinander drehfest verbunden werden.

Abweichend von der vorherigen Beschreibung könnte der Antrieb der jeweiligen Mäheinheiten 14 auch über einen oder mehrere Hydraulik- oder Elektromotoren erfolgen, wodurch einzelne oder alle Getriebe 26, 34, 42 entfallen könnten.

Nach alledem ergibt sich folgendes Antriebskonzept, wobei von drei Mäheinheiten 14 ausgegangen wird.

Der Antrieb wird von dem Trägerfahrzeug 12 über das Zugmittelgetriebe 48 auf das Antriebsrad 46 eingeleitet, das die Welle 44 in Drehung versetzt. Die Welle 44 ist auf beiden Seiten des Getriebegehäuses 50 drehfest über jeweils eine Gelenkwelle 32 mit der Eingangswelle 38 des als Stirnrad- oder Zugmittelgetriebe ausgebildeten weiteren Getriebes 34 verbunden, wobei bei der linken Mäheinheit 14 der rechts über das Getriebegehäuse 40 überstehende Stummel und bei der rechten Mäheinheit 14 der links über das Getriebegehäuse 40 überstehende Stummel als Eingangswelle 38 verwendet wird. Innerhalb der als Stirnrad- oder Zugmittelgetriebe ausgebildeten weiteren Getriebe 34 erfolgt gegebenenfalls mit einer Über- oder Untersetzung eine Weiterleitung des Antriebs zu der jeweiligen Ausgangswelle 36, die dann wiederum über eine Gelenkwelle 32 mit der Eingangswelle 28 des Getriebes 26 drehfest verbunden ist. Das Getriebe 26 leitet den Antrieb schließlich in das betreffende Mähwerk und die gegebenenfalls vorhandene Aufbereitungsvorrichtung ein. Demnach erfolgt der Antrieb der seitlichen Mäheinheiten 14 - oder falls nur eine einzige seitliche Mäheinheit verwendet wird, deren Antrieb -, ohne das hauptsächliche Getriebe 42 zu belasten. Der Antrieb der mittigen und vorgeschalteten Mäheinheit 14 geht aus von der Welle 44 bzw. dem auf dieser befestigten Zahnrad 52, das über den Formschluss mit dem Zahnrad 54 die Ausgangswelle 56 antreibt. Die Ausgangswelle 56 steht über eine weitere Gelenkwelle 32 mit der Eingangswelle 38 des weiteren Getriebes 34 auf der vorgelagerten Mäheinheit 14 in drehfester Verbindung. Eine weitere Gelenkwelle 32 verbindet die Ausgangswelle 36 des weiteren Getriebes 34 mit der Eingangswelle 28 des Getriebes 26, so dass hierüber der Antrieb des Mähwerks und gegebenenfalls der Aufbereitungsvorrichtung sichergestellt wird.

Die Ausbildung der Getriebe 26 als Zugmittelgetriebe mit Riemen lässt zum einen eine Absicherung des Antriebsstrangs gegen Überlastung zu und ermöglicht es zum anderen, den Antrieb jeder Mäheinheit 14 unabhängig von dem einer anderen Mäheinheit 14 abzuschalten.

Die gewählte Anordnung und Ausbildung der weiteren Getriebe 34 macht es darüber hinaus möglich, eine beschädigte Mäheinheit 14 durch eine andere, z.B. des bestehenden Verbandes zu ersetzen. Ein Austausch der seitlichen Mäheinheiten 14 ist ohne jegliche Änderungen möglich; ein Austausch der vorderen Mäheinheit 14 gegen eine seitliche ist möglich, indem das als Winkelgetriebe ausgebildete weitere Getriebe 34 gegen ein als Stirnrad- oder Zugmittelgetriebe ausgebildetes weiteres Getriebe 34 oder umgekehrt ausgewechselt wird, was aufgrund der Anordnung und Befestigungsart problemlos möglich ist. Diese Fähigkeit des problemlosen Austausches macht es möglich, schnell auf einen Schaden an einer Mäheinheit 14 zu reagieren, sodass stets eine dem Trägerfahrzeug 12 vorgelagerte einsetzbare Mäheinheit 14 vorhanden ist. Die Trennung der Mäheinheit 14 von dem Träger 16 erfolgt an dem Flanschbereich 24 mittels nicht gezeigter Schrauben, Bolzen, Haken oder dergleichen.

Der Träger 16 setzt sich aus mehreren Komponenten zusammen, nämlich insbesondere einem ersten Tragteil 58, einem zweiten Tragteil 60, einem dritten Tragteil 62 und einem vierten Tragteil 64, die von dem Trägerfahrzeug 12 getragen und von dessen Hubvorrichtung 18 gegenüber dem Boden in der Höhen verstellt werden. Der Träger 16 bildet mit den Mäheinheiten 14 eine Einheit, die auf dem Boden abgestellt oder von dem Trägerfahrzeug 12 transportiert werden kann.

Der erste Tragteil 58 enthält zwei in der Querrichtung zueinander beabstandete Platten 66, die mittels einer Spange 68 verwindungssteif untereinander verbunden sind. Die Spange 68 steht seitlich über die Platten 66 über und weist einen Anschluss 70 auf. Der Anschluss 70 ist gabelförmig ausgebildet und mit einer nicht näher bezeichneten Öffnung zur Aufnahme eines Bolzens versehen. Jede Platte 66 ist in ihrem oberen Endbereich mit einer Lagerbohrung 72 und an ihrer Rückseite in der unteren Hälfte mit einem Lager 74 versehen, das von einem Rahmen 76 des Trägerfahrzeugs 12 in trennbaren Lagerschalen 78 vertikal schwenkbar aufgenommen wird. Wenn die Lagerschalen 78 getrennt werden, kann der gesamte Träger 16 von dem Trägerfahrzeug 12 gelöst und z. B. durch ein Häckselaggregat ersetzt werden. Das Lager 74 dient zugleich der drehbaren Lagerung einer zu der Welle 44 parallelen Welle des Zugmittelgetriebes 48 auf dem Trägerfahrzeug 12.

Der zweite Tragteil 60 weist in der Seitenansicht von links die Form des oberen Teils eines Fragezeichens auf, enthält ebenfalls zwei Platten 80 und eine Spange 82, die die Platten 80 in deren unteren Endbereich starr miteinander verbindet, seitlich über diese übersteht und endseitig mit einem Anschluss 84 versehen ist. Jede Platte 80 weist in ihrem oberen Endbereich eine vierkantige, insbesondere quadratische Öffnung 86, in ihrem oberen rückwärtigen Bereich eine Lagerbohrung 88, in ihrem unteren Endbereich eine Lagerbohrung 90, sowie im rückwärtigen oberen Bereich unterhalb der Lagerbohrung 88 eine Gabel 92 auf. Der erste und der zweite Tragteil 60 nehmen im zusammengebauten Zustand eine Lage ein, in der sich die Platten 80 des zweiten Tragteils 60 außerhalb der Platten 66 des ersten Tragteils 58 befinden, zu diesen aber einen möglichst kleinen Abstand aufweisen. Die Lagerbohrungen 72, 88 dienen der Aufnahme eines Lagerbolzens 94, sodass der erste und der zweite Tragteil 58, 60 gelenkig miteinander verbunden werden und sich wie eine Schere öffnen oder schließen.

Der zweite Tragteil 60 enthält darüber hinaus einen Querbalken 96, der sich durch die Öffnungen 86 erstreckt und in deren Bereich mit den Platten 80 starr verbunden ist.

Der Querbalken 96 ist als ein Stahlrohr mit quadratischem Querschnitt ausgebildet, das sich bis nahe an die Seitenkanten des Trägerfahrzeugs 12 erstreckt. In den Außenbereichen ist jeweils ein Lagerauge 98 mit einer zumindest im wesentlichen vertikalen Schwenkachse vorgesehen. In der Mitte des Querbalkens 96 und auf seiner Oberseite befindet sich eine Gabel 100 mit Bohrungen 103. An der Rückseite des Querbalkens 96 sind zwei Stege 102 vertikal ausgerichtet angebracht, die parallel zu den Platten 80 verlaufen und zu diesen einen Abstand einhalten, so dass sie die Platten 66 des ersten Tragteils 58 in dem dazwischenliegenden Freiraum aufnehmen und den Lagerbolzen 94 mittragen können. Aufgrund der Verbindung des Querbalkens 96 mit den Platten 80 macht der Querbalken 96 jede Schwenkbewegung des zweiten Tragteils 60 mit.

Der dritte Tragteil 62 hat ungefähr die Gestalt eines Kastens mit Paaren von linken Platten 104, rechten Platten 106 und mittleren Platten 108, die sämtlich parallel zueinander verlaufen und mittels einer vorderen unteren und einer rückwärtigen oberen Spange 110 fest miteinander verbunden, insbesondere verschweißt sind. Jeweils innere Platten der linken und rechten Platten 104 und 106 sind an die Innenseiten der Platten 80 des zweiten Tragteils 60 angeschraubt. Jeweils äußere Platten der linken und rechten Platten 104 und 106 liegen den Außenseiten der Platten 80 gegenüber und sind mit einem Lager 112 zur Aufnahme der Welle 44 versehen. An die Innenseite der inneren der rechten Platten 106 und an die Spange 110 ist eine waagrecht verlaufende Platte 114 angeschweißt, die der vornehmlich lösbaren Aufnahme des hauptsächlichen Getriebes 42 dient. Die mittigen Platten 108 sind im wesentlichen als ein Ring ausgebildet, der einen Innenraum belässt, durch den sich die Welle 44 hindurch erstrecken kann. Dies ist nicht zwingend; vielmehr könnten auch diese Platten 108 vollflächig ausgebildet und mit einem Lager für die Welle 44 ausgestattet sein. Die mittigen Platten 108 weisen einen Abstand zueinander auf und sind in einem vorderen oberen Eckbereich mit Bohrungen 116 versehen. Aufgrund der Verbindung des dritten mit dem zweiten Tragteil 60 und 62 macht der dritte Tragteil 62 die Schwenkbewegung des zweiten Tragteils 60 mit.

Der vierte Tragteil 64 ist in der Form eines Galgens gehalten und hat in der Draufsicht ungefähr die Form eines Dreieckrahmens. Zwei gleiche Schenkel 118 nehmen in einem rückwärtigen und an den zweiten Tragteil 60 angrenzenden Ende einen großen Abstand zueinander ein, während sie in dem vorderen Endbereich zusammenfallen und endseitig eine Gabel 120 aufweisen. Ein Bereich des vierten Tragteils 64 zwischen der Gabel 120 und dem Bereich, in dem die Schenkel 118 zusammenfallen, ist gegenüber den übrigen Bereich der Schenkel 118 um ca. 30 Grad abgewinkelt. Ein dritter Schenkel 122 verbindet die rückwärtigen Enden der beiden Schenkel 118 und verläuft im montierten Zustand parallel zu den Spangen 110 und 82. In den Endbereichen des dritten Schenkels 122 befindet sich jeweils eine Lasche 124 mit einer nicht näher bezeichneten Bohrung, die im montierten Zustand des vierten Tragteils 64 in Deckung mit der Bohrung 90 an dem zweiten Tragteil 60 gebracht werden und mit dieser einen Bolzen 126 aufnehmen kann. Zwischen einem Mittenbereich des dritten Schenkels 122 und dem Verbindungsbereich der Schenkel 118 erstreckt sich ein nach unten durchhängender Tragwinkel 128, der außer an seinen Enden über nicht näher bezeichnete Bleche mit den Schenkeln 118 verbunden ist, und zwar vorzugsweise verschweißt. In dem Eckbereich des Tragwinkels 128 befindet sich eine Bohrung 130. Die Gabel 120 ist mit einer quer zu der Längserstreckung des vierten Tragteils 64 verlaufenden Bohrung 132 versehen. Der vierte Tragteil 64 ist im Betrieb mit dem zweiten Tragteil 60 verbunden, und zwar mittels der Bolzen 126, die durch die Bohrungen 90 gesteckt werden und einer ersten Stellvorrichtung 134, die als eine Schraubspindel oder als Motor, insbesondere als Hydraulikmotor ausgebildet ist. Die Stellvorrichtung 134 wird einenends mittels eines Bolzens in der Gabel 100 an dem zweiten Tragteil 60 und anderenends mittels eines Bolzens in den Bohrungen 130 an dem vierten Tragteil 64 befestigt.

Folgt man der bisherigen Beschreibung ergibt sich ein Träger 16, der sich aus dem ersten bis dem vierten Tragteil 58 bis 64 zusammensetzt.

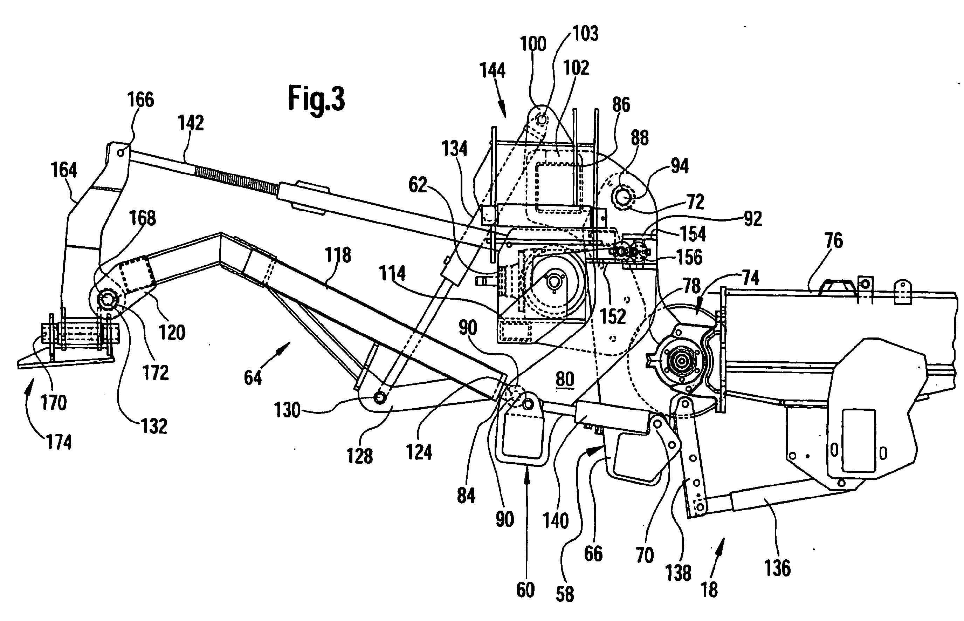

Die Verstellung des Trägers 16 gegenüber dem Trägerfahrzeug 12 erfolgt mittels der Hubvorrichtung 18, die eine zweite Stellvorrichtung 136 vorzugsweise in der Art eines Hydraulikzylinders und einen Schwenkarm 138 aufweist, der einenends um eine quer und horizontal verlaufende Achse an dem Rahmen 76 schwenkbar ist und anderenends von der zweiten Stellvorrichtung 136 beaufschlagt wird, bzw. mit dieser verbunden ist. Der erste Tragteil 58 ist nicht mit dem Schwenkarm 138 oder der zweiten Stellvorrichtung 136 direkt verbunden, sondern liegt lediglich an diesem an. Ein Ausfahren der zweiten Stellvorrichtung 136 bewirkt eine Schwenkbewegung des gesamten Trägers 16 um die Schwenkachse des Lagers 74 im Uhrzeigerdrehsinn mit Blick auf Figur 3; eine Entlastung der zweiten Stellvorrichtung 136 führt zu einer entgegengesetzten Schwenkbewegung des Trägers 16 aufgrund seiner Gewichtskraft.

Eine dritte Stellvorrichtung 140 - ebenfalls vorzugsweise in der Art eines einfachwirkenden Hydraulikmotors - erstreckt sich zwischen den Anschluss 70 an dem ersten Tragteil 58 und dem Anschluss 84 an dem zweiten Tragteil 60 und ist in diesen jeweils mittels nicht gezeigter Bolzen in seinen Endbereichen gesichert.

Schließlich ist eine vierte Stellvorrichtung 142 vorgesehen, die mit ihrem rückwärtigen Endbereich mittels eines nicht gezeigten die Bohrungen 116 der mittigen Platten 108 durchdringenden Bolzens gesichert werden kann. Die vierte Stellvorrichtung 142 kann in einem einfachsten Fall als eine Kette, eine Strebe oder ein sonstiges längenunveränderliches Bauteil ausgebildet sein. In einer sehr komfortablen Ausführungsform kann die Stellvorrichtung 142 aber auch längenveränderlich, z. B. als Hydraulikzylinder ausgebildet sein.

An den Enden des Querbalkens 96 ist jeweils ein kardanischer Gelenkträger 144 vorgesehen, der gedanklich aus zwei U-förmigen Bauteilen zusammengesetzt ist, wobei die "U" jeweils in ihren Bodenbereichen zusammenfallen und um 90 Grad zueinander verdreht sind. Ein innerer und dem Querbalken 96 zugelegener Bereich übergreift mit seinem U den Endbereich des Querbalkens 96, wobei das U in einer horizontalen Richtung offen ist. Die Schenkel weisen ein Lager 146 mit einer im eingebauten Zustand vertikalen Lagerachse auf, das einen nicht bezeichneten und zudem die Lageraugen 98 durchdringenden Bolzen aufnehmen kann. Der dem Querbalken 96 abgelegene Bereich stellt das zweite "U" dar, das in vertikaler Richtung offen ist und Schenkel 148 aufweist, die miteinander fluchtende Bohrungen 150 aufweisen, durch die sich eine horizontale Achse erstreckt. An der Außenseite des rückwärtigen Schenkels 148 befindet sich eine Gabel 152, die sich auf der gleichen Höhe befindet wie eine Gabel 154 an der Außenseite der Platten 80 des zweiten Tragteils 60.

Eine fünfte Stellvorrichtung 156 ist endseitig jeweils in einer der Gabeln 152, 154 schwenkbar gehalten und insbesondere als ein doppelseitig beaufschlagbarer Hydraulikmotor ausgebildet.

Ein Arm 158 für jede seitliche Mäheinheit 14 in der Art eines Rohrs oder rohrähnlichen Schweißzusammenbaus, der ungefähr halb so lange ist wie eine Mäheinheit 14 breit ist, weist einenends ein inneres Lagerauge 160 und anderenends ein äußeres Lagerauge 162 auf, deren Schwenkachsen parallel zueinander verlaufen und die als Lagerfläche z. B. ein eingeschweißtes Rohr enthalten. Auf der Oberseite des Arms 158 sind in Figur 1 angedeutete Lochplatten zur Aufnahme eines Hydraulikmotors einenends vorgesehen, der anderenends zwischen den Platten 148 aufgenommen wird, um die jeweilige seitliche Mäheinheit 14 in der Höhe verstellen bzw. den Bodenunebenheiten anpassen zu können.

Ein Arm 164 für die vordere mittlere Mäheinheit 14 ist ebenfalls als Rohr oder Schweißzusammenbau ausgebildet und weist ein oberes, ein mittleres und ein unteres Lagerauge 166, 168 und 170 auf, wobei die durch das obere und das mittlere Lagerauge 166, 168 verlaufenden Schwenkachsen zueinander parallel und im eingebauten Zustand des Arms 164 auch parallel zu einer durch horizontale Bohrungen 172 in der Gabel 120 verlaufenden Schwenkachse verlaufen. Das obere Lagerauge 166 befindet sich im oberen Endbereich des Arms 164 und das mittlere Lagerauge befindet sich nahe des unteren Endbereichs des Arms 164. Das untere Lagerauge 170 befindet sich im unteren Endbereich des Arm 164 und weist eine im wesentlichen horizontal verlaufende Schwenkachse auf, die gegenüber der des oberen und des mittleren Lagerauges 166, 168 um neunzig Grad versetzt ist. Betrachtet man den Arm 164 im eingebauten Zustand von vorne, dann ist sein oberer Endbereich gegenüber dem Rest um nahezu die Breite des Arms 164 seitlich versetzt. Das obere Lagerauge 166 dient der Verbindung mit der vierten Stellvorrichtung 142, und das mittlere Lagerauge 168 dient dem Anschluss an die Gabel 120, jeweils mittels entsprechender nicht gezeigter Bolzen.

Schließlich sind Anschlusskonsolen 174 vorgesehen, die jeweils eine Platte 176 und ein Lagerauge 178 aufweisen.

Im bevorzugten Ausführungsbeispiel sind die Anschlusskonsolen 174 für alle Mäheinheiten 14 identisch und zwischen den jeweiligen Arm 158 bzw. 164 und die jeweilige Mäheinheit 14 eingefügt. Die Platte 176 ist mit dem Lagerauge 178 starr verbunden, insbesondere verschweißt und weist ein Lochbild auf, das auf ein Lochbild in dem Flanschbereich 24 passt. Das Lagerauge 178 ist so ausgebildet, dass es mittels entsprechender Bolzen mit dem Lagerauge 162 oder 170 verbunden werden kann, wobei die Schwenkachsen in der Mährichtung der Mähvorrichtung 10 verlaufen.

Nach alledem wird die Mähvorrichtung 10 derart zusammengebaut und an den Träger 16 angebracht, dass jede Mäheinheit 14 mit ihrem Flanschbereich 24 zunächst mit der Anschlusskonsole 174, diese mit dem entsprechenden Arm 158, 164, die Arme 158, 164 mit dem vierten Tragteil 64 bzw. dem Querbalken 96 des zweiten Tragteils 60, der zweite Tragteil 60 mit dem ersten Tragteil 58 und der erste Tragteil 58 mit dem Rahmen 76 verbunden wird.

Zum Erreichen der jeweiligen Stellungen der Tragteile 58 bis 64 und der daran angebauten Mäheinheiten 14 werden die Stellvorrichtungen 134, 136, 140, 142 und 156 entsprechend angebaut und soweit erforderlich an ein entsprechendes Stellsystem, z. B. ein Hydrauliksystem, insbesondere des Trägerfahrzeugs 12 angeschlossen.

Schließlich wird das hauptsächliche Getriebe 42 auf den dritten Tragteil 62 montiert und es werden die Antriebsverbindungen gemäß der obigen Beschreibung mittels der Gelenkwellen 32 hergestellt und mit einem nicht gezeigten Antrieb auf dem Trägerfahrzeug 12 verbunden, der z. B. über eine Vorgelegewelle 180 auf das Zugmittelgetriebe 48 eingeleitet wird.

## Patentansprüche

1. Mähvorrichtung (10) mit einem höhenbeweglichen Träger (16) mit wenigstens einem Tragteil (58, 60, 62, 64) zum Tragen einer oder mehrerer Mäheinheiten (14), wobei der Träger (16) von einem Trägerfahrzeug (12) vertikal beweglich aufgenommen und der Tragteil (60) um eine quer zur Mährichtung verlaufende Schwenkachse zusätzlich vertikal verstellbar ist, **dadurch gekennzeichnet, daß** die Verstellung des Tragteils (60) mittels einer fembetätigbaren Stellvorrichtung (140) vornehmbar ist und an dem Träger (16) erfolgt.

2. Mähvorrichtung nach Anspruch 1, **dadurch gekennzeichnet, daß** ein weiterer Tragteil (58) (erster Tragteil 58) des Trägers (16) mit einem Lager (74) zum schwenkbaren Anschluß an das Trägerfahrzeug (12) versehen ist und von einer Hubvorrichtung (18) des Trägerfahrzeugs (12) beaufschlagbar ist.

3. Mähvorrichtung nach Anspruch 1 oder 2, **dadurch gekennzeichnet, daß** der weitere Tragteil (erster Tragteil 58) und der die Mäheinheit(en)tragende Tragteil (zweiter Tragteil 60) um eine Schwenkachse beweglich sind, die oberhalb der Stellvorrichtung (140) angeordnet ist.

4. Mähvorrichtung nach einem oder mehreren der vorherigen Ansprüche, **dadurch gekennzeichnet, daß** an dem Tragteil (zweiter Tragteil 60) mehrere Mäheinheiten (14) spiegelbildlich zu einer Längsmittenachse des Trägerfahrzeugs (12) angebracht sind.

5. Mähvorrichtung nach einem oder mehreren der vorherigen Ansprüche, **dadurch gekennzeichnet, daß** die Verbindungsstelle einer Mäheinheit (14) radial weiter von der Schwenkachse des Tragteils (zweiter Tragteil 60) auf dem weiteren Tragteil (erster Tragteil 58) entfernt liegt, als die Verbindungsstelle wenigstens einer weiteren Mäheinheit (14), wobei die radial weiter entfernte Mäheinheit (14) mittels eines anderen Tragteils (vierter Tragteil 64) vertikal verstellbar an dem Tragteil (zweiter Tragteil 60) angebracht ist und sich zwischen dem weiteren Tragteil (erster Tragteil 58) und der weiter entfernten Mäheinheit (14) eine Stellvorrichtung (vierte Stellvorrichtung 142) befindet.

6. Mähvorrichtung nach einem oder mehreren der vorherigen Ansprüche, **dadurch gekennzeichnet, dass** ein Getriebe (42) für die weiter entfernte Mäheinheit (14) auf einem zusätzlichen und mit dem weiteren Tragteil (erster Tragteil 58) fest verbundenen Tragteil (dritter Tragteil 62) seitlich einer Anschlussstelle für die Stellvorrichtung (vierte Stellvorrichtung 142) vorgesehen ist.

7. Mähvorrichtung nach einem oder mehreren der vorherigen Ansprüche, **dadurch gekennzeichnet, dass** sich zwischen dem weiteren Tragteil (erster Tragteil 58) und dem Tragteil (zweiter Tragteil 60) mindestens eine weitere Stellvorrichtung (dritte Stellvorrichtung 140) und zwischen dem Tragteil (zweiter Tragteil 60) und dem zusätzlichen Tragteil (vierter Tragteil 64) wenigstens eine andere Stellvorrichtung (erste Stellvorrichtung 134) erstreckt.

8. Mähvorrichtung nach einem oder mehreren der vorherigen Ansprüche, **dadurch gekennzeichnet, dass** der Tragteil (zweiter Tragteil 60) an wenigstens einem seitlichen Endbereich einen Arm (150) zur Aufnahme einer Mäheinheit 14 horizontal schwenkbar aufnimmt.

9. Mähvorrichtung nach einem oder mehreren der vorherigen Ansprüche, **dadurch gekennzeichnet, dass** der weitere Tragteil (erster Tragteil 58) an der Hubvorrichtung (18) nur in einer Richtung anliegt.

10. Mähvorrichtung nach einem oder mehreren der vorherigen Ansprüche, **dadurch gekennzeichnet, dass** die Mäheinheit (14) über eine Anschlusskonsole (174) vertikal schwenkbar an einem Arm (158, 164) angreift und die Anschlusskonsole (174) sowohl von dem Arm (158, 164) als auch von der Mäheinheit (14) trennbar ist.

11. Mähvorrichtung nach einem oder mehreren der vorherigen Ansprüche, **dadurch gekennzeichnet, dass** die Anschlusskonsolen (174) vorzugsweise für alle Mäheinheiten identisch ausgebildet sind, jedenfalls aber auf alle Mäheinheiten (14) passende Platten (176) und ein Schwenklager mit einer in der Mährichtung verlaufenden horizontalen Schwenkachse aufweisen.

## Claims

1. Mowing device (10) having a vertically adjustable carrier (16) with at least one carrier part (58, 60, 62, 64) for carrying one or more mowing units (14), whereas the carrier (16) is received vertically moveably by a carrier vehicle (12) and whereas the carrier part (60) is additionally vertically adjustable about a pivot axis extending transverse to the mowing direction **characterized in that** the adjustment of the carrier part (60) can be done by means of a remote controlled adjusting device (140) and at the carrier (16).

2. Mowing device according to claim 1, **characterized in that** a further carrier part (58) (first carrier part (58)) of the carrier (16) is provided with a bearing (74) for a pivot connection to the carrier vehicle (12) and can be applied by a lifting device (18) of the carrier vehicle (12).

3. Mowing device according to claim 1 or 2, **characterized in that** the further carrier part (first carrier part (58)) and the carrier part (second carrier part (60)) carrying the mowing unit(s) (14) are moveable about a pivot axis, which is provided above the adjusting device (140).

4. Mowing device according to one or more of the previous claims, **characterized in that** several mowing units (14) are attached to the carrier part (second carrier part (60)) in a mirror image to the longitudinal axis of the carrier vehicle (12).

5. Mowing device according to one or more of the previous claims, **characterized in that** the coupling interface of one mowing unit (14) is radially more remote from the pivot axis of the carrier part (second carrier part (60)) on the further carrier part (first carrier part (58)), than the coupling interface of at least one further mowing unit (14), whereas the mowing unit (14) being radially more remote is attached to the carrier part (second carrier part (60)) vertically pivotably by means of another carrier part (fourth carrier part (64)) and **in that** an adjusting device (fourth adjusting device (142)) is provided between the further carrier part (first carrier part (58)) and the more remote mowing unit (14).

6. Mowing device according to one or more of the previous claims, **characterized in that** a transmission (42) for the further remote mowing unit (14) is provided laterally of a connecting area for the adjusting device (fourth adjusting device (142)) on an additional carrier part (third carrier part (62)) being rigidly fixed to the further carrier part (first carrier part (58)).

7. Mowing device according to one or more of the previous claims, **characterized in that** at least one further positioning device (third positioning device (140)) is provided between the further carrier part (first carrier part (58)) and the carrier part (second carrier part (60)) and **in that** at least one other positioning device (first positiong device (134)) extends between the carrier part (second carrier part (60)) and the additional carrier part (fourth carrier part (64)).

8. Mowing device according to one or more of the previous claims, **characterized in that** the carrier part (second carrier part (60)) receives horizontally pivotably an arm (150) for carrying a mowing unit (14) in at least one lateral end area.

9. Mowing device according to one or more of the previous claims, **characterized in that** the further carrier part (first carrier part (58)) abuts the lift device (18) in only one direction.

10. Mowing device according to one or more of the previous claims, **characterized in that** the mowing unit (14) applies to an arm (158, 164) vertically pivotably by means of a coupling console (174) and **in that** the coupling console (174) can be separated from the arm (158, 164) as well as from the mowing unit (14).

11. Mowing device according to one or more of the previous claims, **characterized in that** the coupling consoles (174) of preferably all mowing units (14) are formed identically, or at least are provided with plates (176) and a pivot bearing with a horizontal pivot axis extending along the mowing direction fitting to all mowing units (14).

## Revendications

1. Dispositif de fauchage (10) comprenant un support (16) déplaçable en hauteur avec au moins une partie porteuse (58, 60, 62, 64) pour le port d'une ou de plusieurs unités de fauchage (14), le support (16) étant réceptionné par un véhicule support (12) avec une mobilité verticale et la partie porteuse (60) pouvant être déplacée en supplément verticalement autour d'un axe de pivotement agencé transversalement à la direction de fauchage, **caractérisé en ce que** le déplacement de la partie porteuse (60) peut être effectué au moyen d'un dispositif de réglage (140) pouvant être actionné à distance et s'effectue sur le support (16).

2. Dispositif de fauchage selon la revendication 1, **caractérisé en ce qu'**une autre partie porteuse (58) (première partie porteuse 58) du support (16) est dotée d'un palier (74) pour le raccordement basculant au véhicule support (12) et peut être sollicitée par un dispositif de levage (18) du véhicule support (12).

3. Dispositif de fauchage selon la revendication 1 ou 2, **caractérisé en ce que** l'autre partie porteuse (première partie porteuse 58) et la partie porteuse portant la (les) unité(s) de fauchage (seconde partie porteuse 60) sont mobiles autour d'un axe de pivotement qui est disposé au-dessus du dispositif de réglage (140).

4. Dispositif de fauchage selon l'une ou plusieurs des revendications précédentes, **caractérisé en ce que** plusieurs unités de fauchage (14) sont placées sur la partie porteuse (seconde partie porteuse 60) de façon symétrique par rapport à un axe médian longitudinal du véhicule support (12).

5. Dispositif de fauchage selon l'une quelconque ou plusieurs des revendications précédentes, **caractérisé en ce que** le point de liaison d'une unité de fauchage (14) est disposé sur l'autre partie porteuse (première partie porteuse 58) davantage éloignée radialement de l'axe de pivotement de la partie porteuse (seconde partie porteuse 60) que le point de liaison d'au moins une autre unité de fauchage (14), l'unité de fauchage (14) davantage éloignée radialement étant placée au moyen d'une autre partie porteuse (quatrième partie porteuse 64) de façon réglable verticalement sur la partie porteuse (seconde partie porteuse 60) et un dispositif de réglage (quatrième dispositif de réglage 142) se trouvant entre l'autre partie porteuse (première partie porteuse 58) et l'unité de fauchage (14) davantage éloignée.

6. Dispositif de fauchage selon l'une ou plusieurs des revendications précédentes, **caractérisé en ce qu'**une boîte (42) pour l'unité de fauchage (14) davantage éloignée est prévue sur une partie porteuse (troisième partie porteuse 62) supplémentaire et reliée de façon fixe à l'autre partie porteuse (première partie porteuse 58) sur le côté d'un point de raccordement pour le dispositif de réglage (quatrième dispositif de réglage 142).

7. Dispositif de fauchage selon l'une quelconque ou plusieurs des revendications précédentes, **caractérisé en ce qu'**au moins un autre dispositif de réglage (troisième dispositif de réglage 140) s'étend entre l'autre partie porteuse (première partie porteuse 58) et la partie porteuse (seconde partie porteuse 60) et au moins un autre dispositif de réglage (premier dispositif de réglage 134) s'étend entre la partie porteuse (seconde partie porteuse 60) et la partie porteuse supplémentaire (quatrième partie porteuse 64).

8. Dispositif de fauchage selon l'une quelconque ou plusieurs des revendications précédentes, **caractérisé en ce que** la partie porteuse (seconde partie porteuse 60) reçoit de façon basculante horizontalement sur au moins une zone d'extrémité latérale un bras (150) pour la réception d'une unité de fauchage (14).

9. Dispositif de fauchage selon l'une quelconque ou plusieurs des revendications précédentes, **caractérisé en ce que** l'autre partie porteuse (première partie porteuse 58) s'appuie sur le dispositif de levage (18) seulement dans une direction.

10. Dispositif de fauchage selon l'une quelconque ou plusieurs des revendications précédentes, **caractérisé en ce que** l'unité de fauchage (14) s'applique au moyen d'une console de raccordement (174) de façon basculante verticalement sur un bras (158, 164) et la console de raccordement (174) peut être séparée aussi bien du bras (158, 164) que de l'unité de fauchage (14).

11. Dispositif de fauchage selon l'une quelconque ou plusieurs des revendications précédentes, **caractérisé en ce que** les consoles de raccordement (174) sont conçues de préférence identiques pour toutes les unités de fauchage, mais présentent dans tous les cas des plaques (176) adaptées à toutes les unités de fauchage (14) et un palier basculant avec un axe de basculement horizontal agencé dans la direction de fauchage.
